# EUROPÄISCHE PATENTANMELDUNG

(11) **EP 1 010 910 A1**
(43) Veröffentlichungstag der Anmeldung: **21.06.2000**
(21) Anmeldenummer: 98124001.3
(22) Anmeldetag: 17.12.1998
(51) Int. Cl.: F16C 33/64

(54) **Verfahren zur Herstellung von Laufringen für Axial-Wälzlager**

(71) Anmelder: Schwarzbich, Jörg, D-33615 Bielefeld (DE)
(72) Erfinder: Schwarzbich, Jörg, D-33615 Bielefeld (DE)
(74) Vertreter: TER MEER STEINMEISTER & PARTNER GbR

(57) **Zusammenfassung**

Verfahren zur Herstellung von Laufringen (12, 14) für Axial-Wälzlager (10). dadurch **gekennzeichnet**, daß man von einem Rohr (22), dessen Durchmesser etwa dem Durchmesser des herzustellenden Laufrings entspricht, einen Rohling (24) abtrennt, dessen axiale Länge etwa der radialen Breite des Laufrings entspricht, und daß man diesen Rohling schrittweise über mindestens eine konische Zwischenform (30) zu einem flachen Laufring (12) verformt.

## Beschreibung

Die Erfindung betrifft ein Verfahren zur Herstellung von Laufringen für Wälzlager.

Solche Laufringe bestehen typischerweise aus Stahl und haben im Fall von Axiallagern die Grundform einer flachen Ringscheibe. Bisher werden diese Laufringe aus einer flachen Stahlplatte ausgestanzt oder ausgeschnitten.

Bei Wälzlagern mit großem Durchmesser, beispielsweise bei Federbeinlagern für Kraftfahrzeuge, hat dieses Herstellungsverfahren den Nachteil, daß sich im Verhältnis zu der tatsächlich für den Laufring benötigten Materialmenge ein sehr hoher Verschnitt ergibt, so daß hohe Materialkosten entstehen.

Bei Laufringen für Kugellager wird häufig in einer Fläche der Ringscheibe eine Laufrille für die Kugeln gebildet. Die Herstellung dieser Laufrille erfordert einen hohen Vorrichtungs- und Arbeitsaufwand und trägt so zur weiteren Erhöhung der Kosten bei.

Aufgabe der Erfindung ist es, ein Verfahren anzugeben, mit dem sich Laufringe für Axial-Wälzlager, insbesondere solche mit großem Durchmesser, kostengünstiger herstellen lassen.

Diese Aufgabe wird erfindungsgemäß dadurch gelöst, daß man von einem Rohr, dessen Durchmesser etwa dem Durchmesser des herzustellenden Laufrings entspricht, einen Rohling abtrennt, dessen axiale Länge etwa der radialen Breite des Laufrings entspricht, und daß man diesen Rohling schrittweise über mindestens eine konische Zwischenform zu einem flachen Laufring verformt.

Bei dem erfindungsgemäßen Verfahren ist somit das Ausgangsmaterial nicht eine flache Stahlplatte, sondern ein Stahlrohr, beispielsweise ein gezogenes oder geschweißtes Rohr. Von diesem Rohr lassen sich die zylindrischen Rohlinge mit bekannten Verfahren wie Abstechen oder Hacken praktisch ohne Verschnitt abtrennen. Der hohlzylindrische Rohling wird dann vorzugsweise durch Kaltverformung an einem axialen Ende aufgeweitet und/oder am entgegengesetzten axialen Ende verjüngt, so daß man eine konische Zwischenform erhält. Erforderlichenfalls kann die Verformung in mehreren Schritten mit nach und nach zunehmendem Kegelwinkel erfolgen. Im letzten Schritt wird die konische Zwischenform dann flachgedrückt, so daß man den Laufring in der Form einer flachen Ringscheibe erhält.

Die bei diesem Verfahren als Ausgangsmaterial eingesetzten Rohre sind zwar teurer als bei dem herkömmlichen Verfahren verwendete Flachmaterial, doch wird dieser Kostennachteil dadurch mehr als aufgewogen, daß praktisch kein Verschnitt anfällt, so daß der Materialeinsatz insgesamt erheblich verringert werden kann.

Die Anzahl der benötigten Verformungsschritte ist von der Materialbeschaffenheit und den gewünschten Abmessungen des Laufrings abhängig. Die Verformung kann beispielsweise durch Pressen oder Ziehen erfolgen. Der erste Verformungsschritt kann beispielsweise dadurch erfolgen, daß der zylindrische Rohling auf einen konischen Dorn aufgeschoben wird. Eine weitere Möglichkeit besteht darin, den Rohling oder die im ersten Schritt erhaltene Zwischenform zwischen zueinander komplementären konvex- und konkavkonischen Preßwerkzeugen zu pressen. Der letzte Verformungsschritt kann mit flachen Preßwerkzeugen erfolgen.

Vorteilhafte Ausgestaltungen der Erfindung ergeben sich aus den Unteransprüchen.

Vorzugsweise wird der Durchmesser des rohrförmigen Ausgangsmaterials so gewählt, daß er etwa einem Mittelwert zwischen dem Innendurchmesser und dem Außendurchmesser des gewünschten Laufringes entspricht. Hierdurch werden die Druck- und Zugbeanspruchungen des Materials an den entgegengesetzten axialen Enden des Rohlings minimiert.

Im letzten Umformungsschritt kann der Laufring zwischen den flachen Preßwerkzeugen so stark gepreßt werden, daß etwaige Dickenunterschiede zwischen dem inneren und äußeren Rand des Laufrings durch das Pressen ausgeglichen werden. Darüber hinaus führt dieser Preßvorgang zu einer durchaus erwünschten Materialverfestigung.

Wenn der Laufring in einer Oberfläche eine Laufrille aufweisen soll, bietet das erfindungsgemäße Verfahren die vorteilhafte Möglichkeit, diese Laufrille bereits durch Rollen oder Freistechen auf dem rohrförmigen Ausgangsmaterial oder dem zylindrischen Rohling zu bilden. Erforderlichenfalls kann die Laufrille dann an dem flachen Laufring noch einmal nachgerollt werden. Dieses Nachrollen läßt sich relativ einfach bewerkstelligen, weil die Rollkörper dabei in der schon vorgeformten Laufrille geführt werden können.

Da man bei dem erfindungsgemäßen Verfahren ohnehin eine konische Zwischenform erhält, lassen sich auf analoge Weise auch konische oder ballig-konische Laufringe für Schräg-Wälzlager herstellen. Ein entsprechendes Verfahren ist Gegenstand des Anspruchs 4.

Im folgenden werden ein Ausführungsbeispiele der Erfindung anhand der Zeichnung näher erläutert.

Es zeigen:
- Fig. 1: einen Schnitt durch ein Axialkugellager mit nach dem erfindungsgemäßen Verfahren hergestellten Laufringen;
- Fig. 2: einen Schnitt durch ein rohrförmiges Ausgangsmaterial, das für die Herstellung des Laufrings verwendet wird;
- Fig. 3: einen Schnitt durch einen von dem rohrförmigen Ausgangsmaterial abgetrennten Rohling und zugehörige Formwerkzeuge für einen ersten Verformungsschritt;
- Fig. 4: einen Schnitt durch eine in dem ersten Verformungsschritt erhaltene konische Zwischenform;
- Fig. 5: einen Schnitt durch den fertigen Laufring; und
- Fig. 6: einen Schnitt durch Laufringe eines Schräg-Wälzlagers.

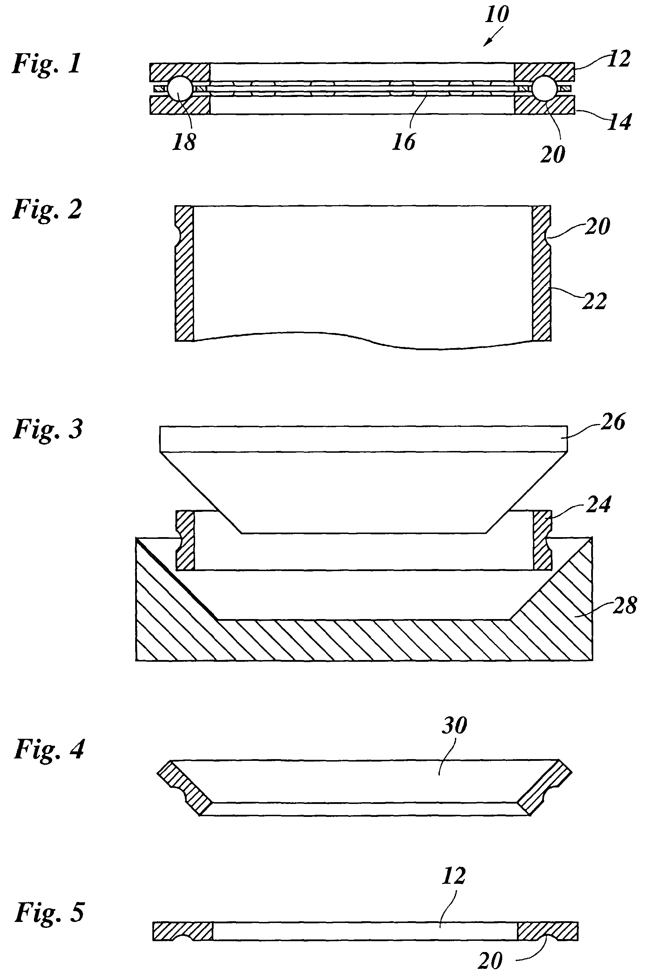

In Figur 1 sind die wesentlichen Teile eines Axialkugellagers 10 gezeigt, nämlich zwei spiegelbildlich zueinander angeordnete flache Laufringe 12, 14, zwischen denen ein Kugelkäfig 16 mit Lagerkugeln 18 angeordnet ist. Die Laufringe 12, 14 weisen in den einander zugewandten Oberflächen jeweils eine Laufrille 20 für die Lagerkugeln auf.

Figur 2 zeigt ein stumpf abgeschnittenes Ende eines Stahlrohres 22, beispielsweise eines geschweißten Rohres, das als Ausgangsmaterial für die Herstellung der Laufringe 12, 14 dient. Der Durchmesser des Stahlrohres 22 liegt etwa in der Mitte zwischen dem Innendurchmesser und dem Außendurchmesser der Laufringe 12, 14 nach Figur 1. In der Außenfläche des Stahlrohres ist in geringem Abstand zu dem stumpf abgeschnittenen Ende bereits die Laufrille 20 freigestochen oder eingerollt worden. Von dem mit der Laufrille 20 versehenen Ende des Stahlrohres 22 wird dann ein Rohling 24 abgetrennt (Figur 3), dessen axiale Länge der radialen Breite der Laufringe 12, 14, d.h., der Differenz zwischen Außen- und Innenradius der Laufringe entspricht. Das Abtrennen des Rohlings 24 von dem Stahlrohr 22 kann in an sich bekannter Weise durch Hacken erfolgen, beispielsweise indem der abzutrennende Rohling von einem ringförmigen Werkzeug umschlossen wird, während der übrign Teil des Stahlrohres von innen durch einen Dom gehalten ist. Durch eine Radialbewegung des ringförmigen Werkzeugs relativ zu dem Dorn wird dann der Rohling abgeschert.

Figur 3 zeigt außerdem ein konisches Oberwerkzeug 26 und ein dazu komplementäres Unterwerkzeug 28 in der Form eines Innenkonus. In einem ersten Verformungsschritt wird der zylindrische Rohling 24 zwischen den Ober- und Unterwerkzeugen gepreßt, so daß man eine konische Zwischenform 30 erhält, die in Figur 4 gezeigt ist. Diese konische Zwischenform 30 wird dann in einem weiteren Verformungsschritt zwischen nicht gezeigten flachen Preßwerkzeugen zu dem flachen Laufring 12 gemäß Figur 5 gepreßt. Die in dem so erhaltenen Laufring bereits vorhandene Laufrille 20 kann erforderlichenfalls nachgerollt werden.

Im gezeigten Beispiel erfolgt die Verformung von dem Rohling 24 zu dem Laufring 12 in zwei Schritten, unter Bildung nur einer einzigen Zwischenform 30, und die konischen Ober- und Unterwerkzeuge 26, 28 haben einen Kegelwinkel von 45°. In einer modifizierten Ausführungsform des Verfahrens ist es auch möglich, mehrere Zwischenschritte vorzusehen. In diesem Fall haben die für den ersten Verformungsschritt verwendeten Werkzeuge einen Kegelwinkel weniger als 45°,und die nachfolgenden Schritte werden jeweils mit Werkzeugen mit einem größeren Kegelwinkel ausgeführt.

Anstelle des konkav-konischen Unterwerkzeugs 28 gemäß Figur 3 kann zumindest für den ersten Verformungsschritt auch ein flaches Unterwerkzeug verwendet werden, mit dem der Rohling 24 auf das als konischer Dorn ausgebildete Oberwerkzeug aufgeschoben wird. Bei dieser Variante kann eine unter Umständen unerwünschte Schädigung des Randbereiches der Außenfläche des Rohlings vermieden werden.

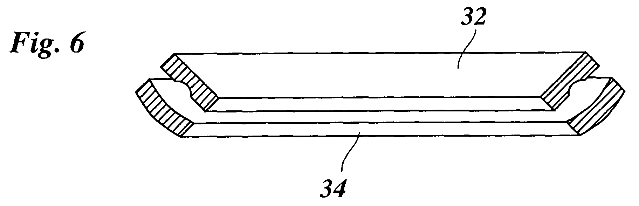

In Figur 6 sind ein konischer Laufring 32 und ein ballig-konischer Laufring 34 dargestellt, die zusammen ein Schrägrollenlager bilden. Bei dem Laufring 32 kann es sich um die Zwischenform 30 gemäß Figur 4 handeln. Die leicht ballige Variante 34 läßt sich mit entsprechend modifizierten Werkzeugen aus dieser Zwtschenform oder direkt aus dem Rohling 24 herstellen.

## Patentansprüche

1. Verfahren zur Herstellung von Laufringen (12, 14) für Axial-Wälzlager (10), dadurch **gekennzeichnet**, daß man von einem Rohr (22), dessen Durchmesser etwa dem Durchmesser des herzustellenden Laufrings entspricht, einen Rohling (24) abtrennt, dessen axiale Länge etwa der radialen Breite des Laufrings entspricht, und daß man diesen Rohling schrittweise über mindestens eine konische Zwischenform (30) zu einem flachen Laufring (12) verformt.

2. Verfahren nach Anspruch 1, dadurch **gekennzeichnet**, daß als Rohr (22) ein geschweißtes Rohr verwendet wird.

3. Verfahren nach Anspruch 1 oder 2, dadurch **gekennzeichnet**, daß in der Außenfläche des Rohres (22) oder des Rohlings (24) eine umlaufende Rille (20) gebildet wird, die nach dem letzten Verformungsschritt eine Laufrille für die Wälzkörper (18) bildet.

4. Verfahren zur Herstellung von Laufringen (12, 14) für Schräg-Wälzlager (10), dadurch **gekennzeichnet**, daß man von einem Rohr (22), dessen Durchmesser etwa dem Durchmesser des herzustellenden Laufrings entspricht, einen Rohling (24) abtrennt, dessen axiale Länge etwa der Breite des Laufrings entspricht, und daß man diesen Rohling in mehreren Schritten über ein oder mehrere Zwischenformen oder direkt in einem Schritt zu einem konischen oder ballig-konischen Laufring (32, 34) verformt.
